# EUROPÄISCHE PATENTSCHRIFT

(11) **EP 1 242 797 B1**
(45) Veröffentlichungstag und Bekanntmachung des Hinweises auf die Patenterteilung: **18.06.2003**
(21) Anmeldenummer: 00993337.5
(22) Anmeldetag: 04.12.2000
(51) Int. Cl.: G01L 5/28, G01L 1/14

(54) **AKTORINTEGRIERTER KRAFTSENSOR**
ACTUATOR-INTEGRATED FORCE SENSOR
CAPTEUR DE FORCE A ELEMENT D'ACTIONNEMENT INTEGRE

(30) Priorität: 07.12.1999 DE 19958903
(43) Veröffentlichungstag der Anmeldung: 25.09.2002
(73) Patentinhaber: SIEMENS AKTIENGESELLSCHAFT, 80333 München (DE)
(72) Erfinder: WÜNSCHE, Hans, 86929 Penzing/Ramsach (DE); SPRIEGEL, Dieter, 81379 München (DE); DOEMENS, Günter, 83607 Holzkirchen (DE)
(86) Internationale Anmeldenummer: DE0004319
(87) Internationale Veröffentlichungsnummer: WO01042755

(56) Entgegenhaltungen:
- EP-A- 0 849 576
- DE-A- 1 807 613
- DE-A- 4 132 110
- DE-A- 19 637 614

## Beschreibung

Die Erfindung betrifft einen Kraftsensor, der in einen Aktor zur Erzeugung bzw. Übertragung einer Kraft im Kraftfluß integriert ist und quer zum Kraftfluß einen Aktorboden aufweist.

Heute wird bei Kraftfahrzeugen die Bremsfunktion durch hydraulisch betätigte Aktoren realisiert. Bei dem als "Brake-by-Wire" bezeichneten Verfahren handelt es sich um elektrisch betriebene Bremsvorrichtungen. Darin werden Aktoren, d.h. Elemente, in denen die Bremskraft erzeugt wird, und mittels der die Bremskraft übertragen wird, über elektromotorische Untersetzungsantriebe betätigt. Die daraus resultierenden Vorteile liegen in der individuellen und variablen Gestaltung des Bremsprozesses sowie in der gleichzeitigen Wahrnehmung anderer Funktionen, wie beispielsweise der ABS-Funktion (Anti-Blockier-System). Da ein elektromechanisches Bremssystem in der Regel bremskraftgeregelt arbeiten wird, stellt die präzise Bremskraftmessung eine wesentliche Grundlage für die Leistungsfähigkeit des Gesamtsystems dar. An die Genauigkeit des Systems werden dabei aufgrund des Gleichlaufes hohe Anforderungen gestellt. Beispielsweise sollen Fehlertoleranzen < 1% sein, auch wenn die Bremskraft beispielsweise 5 t beträgt. Die Meßaufgabe wird ferner durch die eingeschränkte Zugänglichkeit relevanter Meßorte, durch den geringen Freiraum in Kraftrichtung sowie den extrem hohen räumlichen sowie zeitlichen Temperaturgradienten erheblich erschwert.
Diese Aspekte schließen die Verwendung von bekannten Kraftsensoren, wie z.B. Dehnungsmeßstreifen weitgehend aus.

Der Erfindung liegt die Aufgabe zugrunde, eine genaue und eindeutige Erfassung von Bremskräften möglichst nahe am Wirkungsort der Bremskraft zu ermöglichen.

Die Lösung dieser Aufgabe geschieht durch die Merkmalskombination entsprechend Anspruch 1.

Vorteilhafte Ausgestaltungen sind den Unteransprüchen zu entnehmen. Der Erfindung liegt die Erkenntnis zugrunde, daß ein Kraftsensor in einfacher Weise in einem Aktor integrierbar ist. Die Durchbiegung eines Aktorbodens bzw. eines Bremskolbenbodens (eine Bezeichnung in Anlehnung an hydraulische Systeme) kann als Meßgröße für die Bremskraft genutzt werden. Der Aktorboden wird dazu entsprechend ausgestaltet. Der Aktor ist in der Regel hohlzylinderförmig aufgebaut, weist einen Aktorboden auf und enthält weiterhin einen Auflagering mit dem er am Bremsbelag einer Bremse direkt oder mittelbar anliegt. Die Bremskraft wird zentrisch erzeugt und auf den Aktorboden eingeleitet.

In vorteilhafter Weise wird die Verformung des Aktorbodens mittels verschiedener Meßverfahren ermittelt. Ein serientaugliches Verfahren ist das kapazitive Meßverfahren, wobei der Aktorboden eine Elektrode eines Kondensators darstellt, dessen mit der Verformung veränderte Kapazität ermittelt wird. Der Kondensator wird also in der Regel ein Plattenkondensator sein, wobei die dem Aktorboden gegenüberliegende Elektrode plattenförmig ausgebildet und federunterstützt an eine Auflage angedrückt wird, so daß durch die hohen Temperaturgradienten keine mechanischen Spannungen in den Isolator der Elektrode übertragen werden und demnach ein definierter Elektrodenabstand sichergestellt ist, wie es beispielsweise in der . Europäischen Patentschrift EP 0 849 576 B1 beschrieben wird.

Da die Verbindungsstelle zwischen Aktorboden und dem in der Regel zylindrisch ausgeführten rückwärtigen Teil des Aktors einerseits und andererseits dem Auflagering relativ starr ausgebildet ist, können durch die Bremskraft an dieser Stelle Drehmomente auf den Auflagering übertragen werden, welche durch Reibungseffekte zu einem hysteresebehafteten Messen führen. Deshalb wird der Materialquerschnitt an dieser Verbindungsstelle in vorteilhafter Weise durch eine innen umlaufende Nut, eine außen umlaufende Nut oder durch eine Kombination daraus verringert, so daß nur minimale Drehmomente übertragen werden.

Die für eine minimierte Hysterese vorgesehenen Maßnahmen sind ebenso dazu geeignet, in axialer Richtung einen Temperaturgradienten im Aktorboden durch weitgehend radiale Wärmeeinleitung zu unterdrücken. Axiale Temperaturgradienten hätten eine Verwölbung des Aktorbodens in Richtung der zu messenden Kraft und dadurch ein Fehlmessung zur Folge.

Im folgenden werden anhand von schematischen die Erfindung nicht einschränkenden Figuren Ausführungsbeispiele beschrieben.
- Figur 1: zeigt einen Aktorboden mit Auflagering, wobei Isothermen und Wärmefluß eingetragen sind,
- Figur 2: zeigt einen Aktorboden im Ruhezustand, sowie im verformten Zustand,
- Figur 3: zeigt einen Aktor mit innen und außen umlaufend angebrachten Nuten zur Verringerung des Materialquerschnittes zwischen Aktorboden und Auflagering,
- Figur 4: zeigt eine ähnliche Darstellung entsprechend Figur 2, jedoch mit hysteresefreiem Verformungsweg des Aktorbodens,
- Figur 5: zeigt einen Aktor mit Meßelementen für die Verformung Δz,
- Figur 6: zeigt einen Aktor mit kapazitiver Meßeinrichtung für die Verformung Δz,
- Figur 7: zeigt eine schematische Schnittdarstellung eines Kraftfahrzeug-Bremssystemes mit im Kraftschluß und im Aktor integrierten Sensor.

Ein wesentliches Element der Erfindung besteht in der Integration des Kraftsensors im Aktor, wobei der Aktorboden als Meßelement herangezogen wird. Die elastische Deformation des Aktorbodens bei entsprechender Aufbringung einer Kraft ist somit die Meßgröße an diesem Verformungselement. Von der Verformung kann auf die Größe der Kraft geschlossen werden.

Zur Verhinderung einer temperaturbedingten Verformung am Aktorboden in Meßrichtung, d. h. in Kraftrichtung, wird dafür gesorgt, daß an der Verbindungsstelle Aktorboden-Auflagering die Temperatureinleitung bzw. der Wärmeeinfluß derart gestaltet ist, daß Temperaturgradienten in Kraftrichtung minimiert werden, was gleichbedeutend mit einem annähernd axialen in Kraftrichtung ausgebildeten Verlauf der Isothermen. Somit wird der Wärmefluß fast ausschließlich in radialer Richtung nach innen laufen.

Zur Verhinderung von Hysterese-Effekten während verschiedener Lastwechsel, in denen die Kraft auf- und abgefahren wird, wird die Entstehung von Drehmomenten bzw. deren Übertragung auf den Auflagering gezielt minimiert. Dies führt zu einer gelenkähnlichen Ausführung der Verbindungsstelle zwischen Aktorboden und Auflagering. Da der Aktorboden als membranartiger Verformungskörper dient, wird bei Kraftbeaufschlagung an der Verbindungsstelle zwischen Aktorboden und äußerem Zylinder bzw. Auflagering ein Drehmoment entstehen, dessen Drehpunkt innerhalb dieser T-Verbindung positioniert ist. Dies führt zu einem radialen Auswandern der Auflagefläche des Auflageringes auf dem Bremsbelag. Durch an der Auflagestelle vorhandene Reibungskräfte wird beim Zurückfahren der Last die ursprüngliche Auflageposition nicht mehr erreicht, so daß Hysterese-Effekte auftauchen, die reproduzierbare Messungen verhindern. Durch entsprechend eingebrachte Nuten, die umlaufend ausgebildet sind, wird die Übertragung von Drehmomenten an der angesprochenen Stelle verhindert.

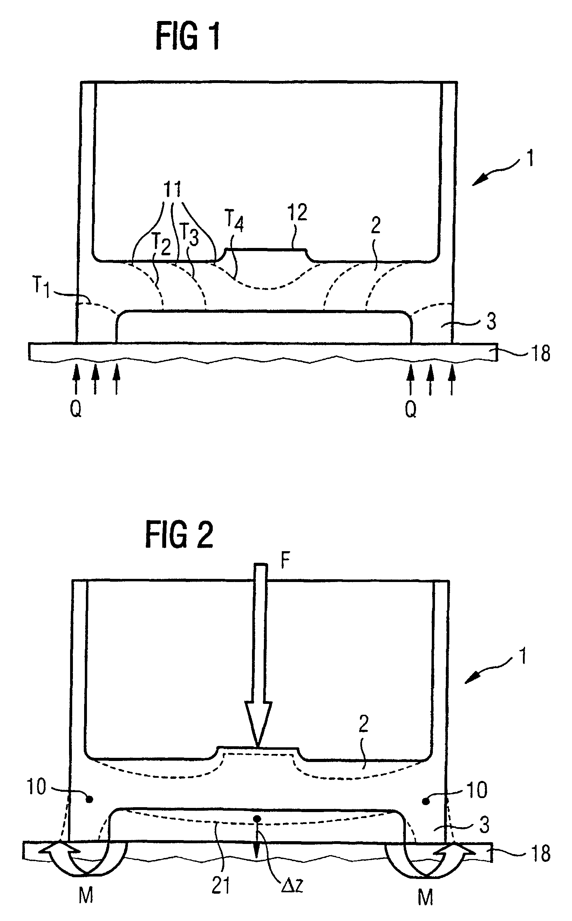

Figur 1 zeigt den Schnitt durch einen Aktor 1, wobei der Aktorboden 2 senkrecht zur Kraftrichtung angeordnet ist. Die Kraftrichtung wird in Figur 2 dargestellt. In Figur 1 sind weiterhin eine Sockelebene 12 als Angriffspunkt für die Kraft, ein Auflagering 3, ein Bremsbelag 18 sowie die Richtung des Wärmeflusses eingezeichnet. Der Aktor 1 ist insgesamt zylinderförmig, größtenteils hohlzylinderförmig, ausgebildet. Dabei ist in Kraftrichtung hinter dem Aktorboden 2 der Auflagering 3 im Bereich des äußeren Umfanges des Aktorbodens 2 angeordnet. Zur Führung des Aktorbodens ist gegenüberliegend vom Auflagering 3 die hohlzylinderförmige Ausbildung über den Aktorboden 2 hinaus entgegen der Kraftrichtung verlängert. Weiterhin sind im Aktorboden 2 Isothermen 11 eingetragen, die verschiedene Temperaturen T₁ bis T₄ kennzeichnen. Die Ausführung entsprechend Figur 1 enthält keinerlei Sensorelemente und weist keine Merkmale auf, die Temperatur- bzw. Hysterese-Effekte verhindern können. Wesentlich in Figur 1 ist, daß der Wärmefluß Q, ausgehend von dem Bremssystem mit dem Bremsbelag 18, auf dem der Auflagering 3 aufliegt, in einer Art und Weise in den Aktorboden 2 eingeleitet wird, daß im Aktorboden 2 Temperaturgradienten in Kraftrichtung auftreten. Dies führt zu temperaturbedingten Verformungen des Aktorbodens, welche eine fehlerhafte Kraftmessung zur Folge hat.

Figur 2 zeigt eine Darstellung entsprechend Figur 1, wobei die Kraft F, die Bremskraft, schematisch angetragen ist sowie die Verformung des Aktorbodens 2 in Form des durchgebogenen Aktorbodens 2. Die maximale Durchbiegung ΔZ wird in der Mitte des meist radialsymmetrischen Bauteiles auftreten. Die eingezeichnete Verformung wird an der Verbindungsstelle zwischen Aktorboden 2 und Auflagering 3 ein Drehmoment erzeugen, dessen Drehpunkt 10 markiert ist. Durch dieses Drehmoment wird bei Kraftbeaufschlagung die auf dem Bremsbelag 18 aufliegende Fläche des Auflageringes 3 nach außen versetzen. Die Drehmomente M sind schematisch angetragen.

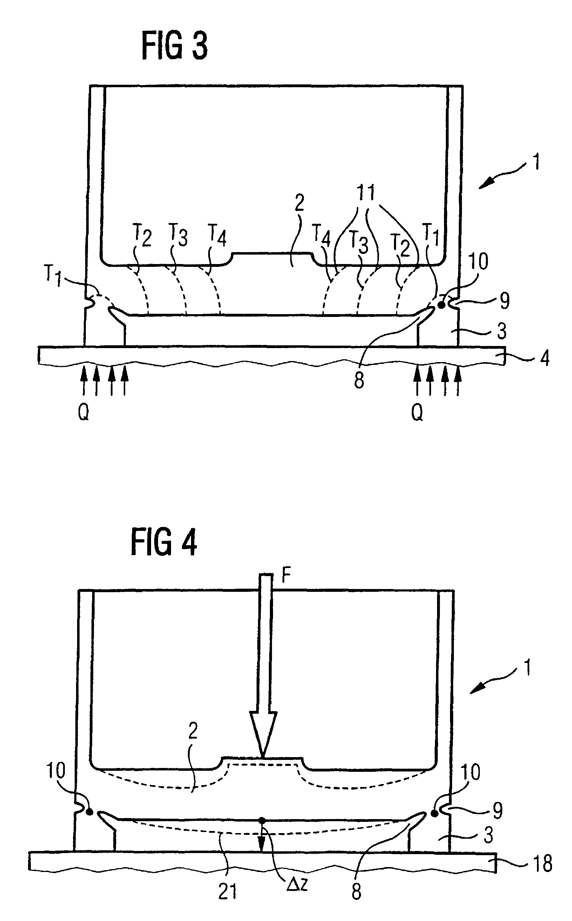

Figur 3 zeigt eine Darstellung entsprechend Figur 1, wobei durch eine innen umlaufende Nut 8 und eine außen umlaufende Nut 9 die Einleitung des Wärmeflusses in den Aktorboden 2 annähernd senkrecht zur Kraftrichtung, d. h. radial von außen nach innen, geschieht. Dies führt zu annähernd kraftparallelen Isothermen 11. Durch diese Maßnahme werden keine temperaturbedingten Verformungen auftreten.

Figur 4 zeigt eine Anordnung entsprechend Figur 2, wobei ebenfalls durch umlaufende Nuten 8 und 9 zwischen Aktorboden 2 und Auflagering 3 Maßnahmen ergriffen wurden, um bei Krafteinwirkung auftretende Drehmomente M zu eliminieren. Somit kann sich der Aktorboden 2 um einen maximalen Betrag von ΔZ durchbiegen, ohne daß an seinen äußeren Rändern Drehmomente auf den Auflagering 3 wirken, die dessen Auflagefläche auf den Bremsbelag 18 nach außen auswandern lassen. Durch die Nuten 8 und 9 ist der Materialquerschnitt entsprechend verringert, so daß eine gelenkartige Ausbildung erreicht wird.

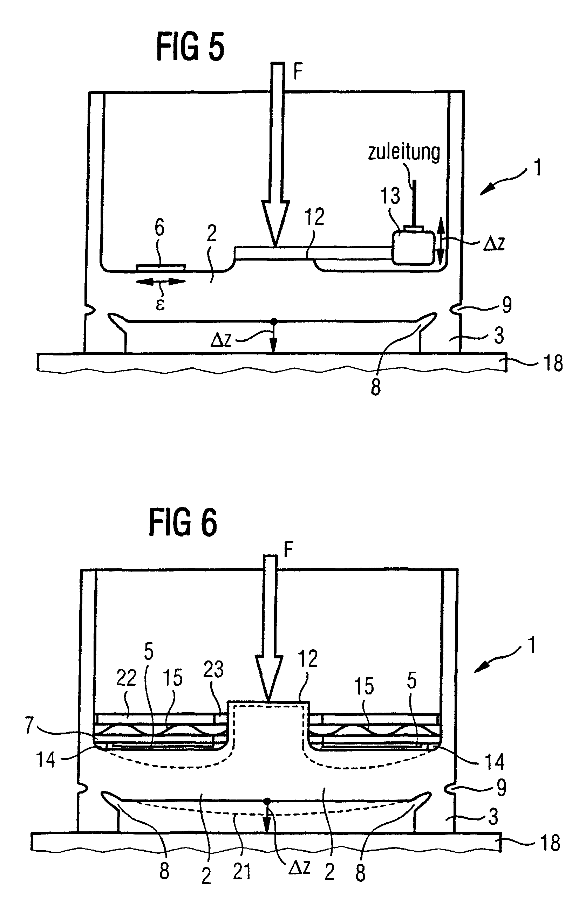

Figur 5 zeigt eine Aktoranordnung mit einer Messung der Aktorbodendurchbiegung ΔZ mit unterschiedlichen Sensoren. Zum einen kann die Durchbiegung des Aktorbodens 2 mit einem berührungslosen Abstandssensor 13 induktiv oder optisch gemessen werden. Dieser berührungslose Sensor ist dazu auf der senkrecht zur Kraftrichtung ausgerichteten Sockelebene 12 montiert und wird somit entsprechend dem zentralen Bereich des Aktorbodens 2 um ΔZ versetzt. Diese Versetzung wird berührungslos durch Annäherung des Sensors an den Aktorboden 2 durchgeführt.

Eine weitere Meßmethode beinhaltet den Einsatz von Dehnungssensoren 6, die für höhere Temperaturen geeignet sind. Diese Sensoren messen entsprechend ihrer Bezeichnung eine Dehnung ε, die auftritt, wenn eine Kraft F auf den Aktorboden 2 wirkt. Als Dehnungssensoren können metallische, Halbleiter- oder piezoresistive Dehnungsmeßstreifen, sowie kapazitive Dehnungssensoren in Silizium-Oberflächenmikromechanik verwendet werden. Wie bisher sind die umlaufenden Nuten 8 und 9 in Figur 5 dargestellt sowie die Auflage des Auflageringes 3 auf dem Bremsbelag 18.

Figur 6 zeigt den Aktor 1 mit einer kapazitiven Meßanordnung. Gemessen wird wiederum ΔZ. Die kapazitive Meßanordnung beinhaltet eine auf einer Elektrodenhalterung 7 angebrachte Elektrode 5. Die Elektrodenhalterung ist in ihrem äußeren Bereich auf einer Auflage 14 federunterstützt angedrückt. Die Auflage 14 wird, auch bei Krafteinwirkung, ortsfest bleiben. Die Federunterstützung wird durch die Feder 15 bewerkstelligt, die sich an einem rückwärtigen Deckel 4 abstützt. Somit ist gewährleistet, daß die Elektrode 5 in Ruhestellung annähernd planparallel zum Aktorboden 2 ausgerichtet ist. Der Aktorboden 2 stellt somit die Gegenelektrode zur Elektrode 5 dar. Eine Veränderung des Abstandes dieser beiden Elektroden erzeugt ein zu ΔZ proportionales Signal.

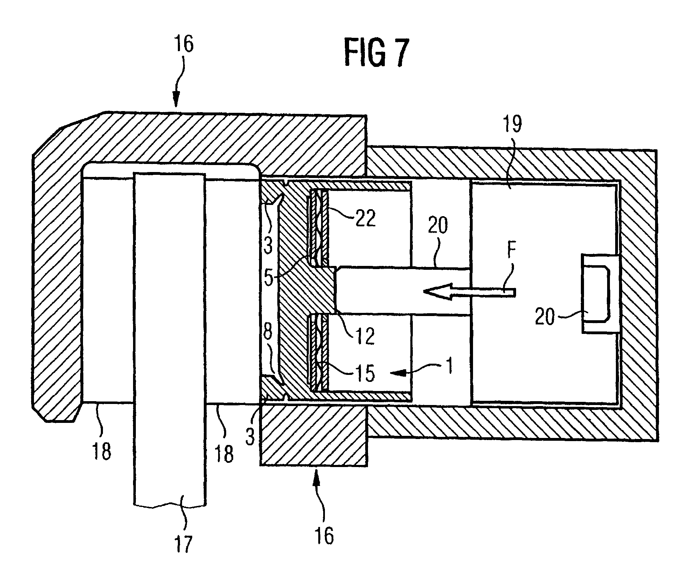

Figur 7 zeigt die gesamte Anordnung eines Bremssystemes, das an einer Bremsscheibe 17 angreift. Die durch den Bremssattel 16 zusammengehaltenen Bremsbeläge 18 werden beiderseitig an die Bremsscheibe 17 angedrückt, wenn über den Motor 19 eine Spindel 20 elektromotorisch eine Bremskraft auf den Aktor 1 ausübt. Der elektromotorische Antrieb ist meist mit einer Untersetzung verbunden. Die Spindel 20 überträgt die Bremskraft zentral auf den Aktorboden 2, wobei sich der Motor 19 rückwärtig an einem Teil des Bremssattels 16 abstützt. Weiterhin ist der kapazitive Sensor 22 schematisch eingetragen. In der Darstellung entsprechend Figur 7 läßt sich der Wärmefluß verdeutlichen, der ausgehend von den Kontaktflächen zwischen Bremsscheibe 17 und Bremsbelag 18 über den Bremsbelag nach hinten in den Auflagering 3 und über diesen in den Aktorboden 2 eingeleitet wird. Nachdem hier Temperaturunterschiede von mehreren 100°C auftreten können, wird deutlich, daß temperaturbedingte Verformungen reproduzierbare Messungen verhindern können.

In Bezug auf Temperatureinfluß und Hysterese ist weiterhin folgendes anzumerken. Der Temperatureinfluß an einer Bremse kann enorm sein, da beim Bremsvorgang in wenigen Sekunden eine erhebliche Erwärmung des Aktors 1 geschieht. Der Wärmefluß Q geschieht dabei ausschließlich über den Auflagering 3 und verteilt sich dann in den Aktorboden 2. Dabei treten erhebliche axiale Temperaturgradienten im Aktorboden auf, was in Figur 1 dargestellt ist. Dies führt zu einer temperaturabhängigen Verwölbung ΔZ des Aktorbodens 3 und damit zu einer Fehlmessung. Bringt man jedoch im Innenraum des Auflageringes 3 eine Eindrehung in Form einer umlaufenden Nut 8 an, so wird der Wärmestrom nahezu radial in den Aktorboden 3 eingeleitet und damit eine temperaturbedingte axiale Verwölbung ΔZ ausgeschlossen.

Die Hysterese-Erscheinungen an dem beschriebenen Aktor treten aufgrund der relativ starren Verbindung des Aktorbodens 2 mit dem Auflagering 3 auf. Die zentrisch eingeleitete Bremskraft verursacht nicht nur eine Durchbiegung ΔZ am Aktorboden 2, sondern erzeugt auch ein Drehmoment M entsprechend Figur 2. Dieses Drehmoment sorgt für ein radiales Auswandern der Auflagefläche des Auflageringes 3. Bei Entlastung tritt jedoch dann aufgrund der beträchtlichen Reibungskräfte eine erhebliche Hysterese auf, die ein der Kraft F proportionales Zurückgehen der Verformung ΔZ zu einem gewissen Teil verhindert. Erfindungsgemäß wird die Hysterese dadurch vermieden, daß die starre Verbindung zwischen Aktorboden 2 und Auflagering erheblich im Querschnitt geschwächt wird. Weiterhin wird die Verbindung zwischen diesen beiden Teilen in etwa mittig zur Auflagefläche angeordnet, wie in Figur 4 dargestellt. Darüber hinaus wird zur Herstellung des Sensors ein hysteresearmer Werkstoff verwendet. Vorzugsweise werden hier ausscheidungshärtbare rostfreie Edelstähle, beispielsweise vom Typ 17-4PH eingesetzt. Die Messung der Bremskraft proportionalen Verformung ΔZ wird zweckmäßigerweise relativ zum Rand des Aktors durchgeführt. Hierfür können induktive sowie optische Methoden verwendet werden. Besonders geeignet sind aufgrund der hohen Temperaturen auch kapazitive Meßprinzipien wie es in Figur 6 dargestellt wird. Die entsprechende Kapazitätsänderung entsteht durch eine bremskraftabhängige Änderung des Elektrodenabstandes zum Aktorboden 2. Ein zur Verformung ΔZ und damit zur Bremskraft F proportionales Meßsignal ergibt sich auch aus der radialen Dehnung ε des Aktorbodens 2. Als Dehnungssensoren kommen in diesem Fall Hochtemperatur-Meßstreifen, piezoresistive Sensoren oder kapazitive mikromechanische Dehnungssensoren in Frage.

Die Erfindung basiert auf der Nutzung des bereits vorhandenen Aktorbodens 2 als Verformungskörper für eine direkte Bremskraftmessung sowie in dessen geometrische Gestaltung hinsichtlich einer weitgehend temperaturunabhängigen und hysteresefreien Kraftmessung.

## Patentansprüche

1. Aktorintegrierter Kraftsensor zur Kraftmessung im Kraftfluß mit einem quer zum Kraftfluß ausgebildeten Aktorboden (2), auf den die Kraft (F) zentral einwirkt und einem am Aktorbodenaußenrand in Kraftrichtung umlaufend angeordneten Auflagering (3) zur Weiterleitung der Kraft (F), wobei der mit der Kraft (F) verformbare Aktorboden (2) Teil des Kraftsensors ist und dessen detektierbare Verformung ein Maß für die Kraft (F) darstellt.

2. Kraftsensor nach Anspruch 1, wobei die Verformung mittels induktiver oder optischer Meßverfahren oder mit metallischen, piezoresistiven oder Halbleiter-Dehnungsmeßstreifen oder mit Dehnungssensoren in Silizium-Oberflächenmikromechanik detektierbar ist.

3. Kraftsensor nach Anspruch 1, wobei die Verformung mittels kapazitiver Meßverfahren detektierbar ist.

4. Kraftsensor nach Anspruch 3, wobei eine zentrale Durchbiegung (Δz) des Aktorbodens (2) relativ zum Aktorrand mittels einer Plattenkondensatoranordnung, bestehend aus einer auf einer federunterstützt an eine Auflage (14) angedrückten Elektrodenhalterung (7) aufgebrachten Elektrode (5) und einer durch den Aktorboden (2) dargestellten Gegenelektrode, detektierbar ist.

5. Kraftsensor nach einem der vorhergehenden Ansprüche, wobei der Querschnitt der Verbindung zwischen Aktorboden (2) und Auflagering (3) mittels einer inneren umlaufenden Nut (8) verringert ist, so dass im Aktorboden minimierte Temperaturgradienten in Kraftrichtung auftreten.

6. Kraftsensor nach Anspruch 5, wobei zur verminderten mechanischen Kopplung zwischen Aktorboden (2) und Auflagering (3) eine Verringerung im Materialquerschnitt vorgesehen ist, so dass eine Momentenübertragung vom Aktorboden auf den Auflagering minimiert ist.

7. Kraftsensor nach einem der vorhergehenden Ansprüche, wobei der Auflagering (3) mindestens eine Öffnung aufweist.

8. Kraftsensor nach Anspruch 7, wobei mehrere Öffnungen gleichmäßig über den Umfang des Auflageringes (3) verteilt sind.

## Claims

1. Force sensor with integrated actuator for measuring force in the force flux with an actuator bottom (2) which is formed transversely with respect to the force flux and on which the force (F) acts centrally, and a supporting ring (3) arranged peripherally on the outer edge of the actuator bottom in the direction of force for transmitting the force (F), the actuator bottom (2) which can be deformed with the force (F) being part of the force sensor and its detectable deformation constituting a measure of the force (F).

2. Force sensor according to Claim 1, the deformation being detectable by means of inductive or optical measuring methods or with metallic, piezoresistive or semiconductor strain gauges or with strain sensors with silicon surface micromechanics.

3. Force sensor according to Claim 1, the deformation being detectable by means of capacitive measuring methods.

4. Force sensor according to Claim 3, a central deflection (Δz) of the actuator bottom (2) relative to the actuator edge being detectable by means of a plate capacitor arrangement, composed of an electrode (5) positioned on an electrode mount (7) which is pressed, with spring support, onto a base (14), and a corresponding electrode which is constituted by the actuator bottom (2).

5. Force sensor according to one of the preceding claims, the cross section of the connection between the actuator bottom (2) and supporting ring (3) being reduced by means of an internal peripheral groove (8) so that minimized temperature gradients occur in the direction of force in the actuator bottom.

6. Force sensor according to Claim 5, a reduction in the material cross section being provided in order to bring about reduced mechanical coupling between the actuator bottom (2) and supporting ring (3) so that transmission of force from the actuator bottom to the supporting ring is minimized.

7. Force sensor according to one of the preceding claims, the supporting ring (3) having at least one opening.

8. Force sensor according to Claim 7, a plurality of openings being distributed uniformly over the circumference of the supporting ring (3).

## Revendications

1. Capteur de force intégré dans un actionneur destiné à la mesure d'une force dans un flux de force, ayant une base (2) d'actionneur, dessinée perpendiculairement au flux de forces et sur laquelle la force (F) agit d'une façon centrale, et une bague d'appui (3), disposée d'une façon circulaire sur le bord extérieur de la base de l'actionneur dans la direction de la force et destinée à transmettre la force (F), la base (2) de l'actionneur déformable sous l'effet de la force faisant partie du capteur de force et sa déformation détectable constituant une grandeur pour la force (F).

2. Capteur de force selon la revendication 1, la déformation pouvant être détectée au moyen de méthodes de mesure inductives ou optiques ou avec des jauges d'allongement métalliques, piézorésistives ou à semi-conducteurs ou avec des capteurs d'allongement réalisés en micromécanique des surfaces au silicium.

3. Capteur de force selon la revendication 1, la déformation pouvant être détectée au moyen d'une méthode de mesure capacitive.

4. Capteur de force selon la revendication 3, une flexion centrale (Δz) de la base (2) de l'actionneur par rapport au bord de l'actionneur pouvant être détectée au moyen d'un dispositif de condensateur à plaques composé d'une électrode (5), montée sur un support (7) d'électrode qui s'applique sur un appui (14) soutenu par un ressort, et d'une contre électrode constituée par la base (2) de l'actionneur.

5. Capteur de force selon l'une des revendications précédentes, la section de la jonction entre la base (2) de l'actionneur et la bague d'appui (3) étant réduite par une gorge intérieure circulaire (8) si bien que des gradients de température minimes apparaissent, dans le sens de la force, dans la base de l'actionneur.

6. Capteur de force selon la revendication 5, une diminution de la section du matériau étant prévue pour réduire le couplage mécanique entre la base (2) de l'actionneur et la bague d'appui (3), si bien qu'une transmission du moment du couple entre la base de l'actionneur et la bague d'appui est minimisée.

7. Capteur de force selon l'une des revendications précédentes, la bague d'appui (3) ayant au moins une ouverture.

8. Capteur de force selon la revendication 7, plusieurs ouvertures étant réparties régulièrement sur la circonférence de la bague d'appui (3).
